(19) Europäisches Patentamt
European Patent Office
Office européen des brevets

(11) **EP 1 801 546 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
***G01D 5/347*** *(2006.01)*

(21) Anmeldenummer: **06023297.2**

(22) Anmeldetag: **09.11.2006**

(54) **Informationsträger in einem Encoder**

Information carrier in an encoder

Support d'informations dans un codeur

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2005 DE 102005061987**

(43) Veröffentlichungstag der Anmeldung:
**27.06.2007 Patentblatt 2007/26**

(73) Patentinhaber: **SICK STEGMANN GmbH**
**78166 Donaueschingen (DE)**

(72) Erfinder:
• **Parriaux, Olivier**
**4200 Saint-Etienne (FR)**
• **Tishchenko, Alexander V.**
**42100 Saint-Etienne (FR)**
• **Mutschler, Reinhold**
**78056 Villingen-Schwenningen (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**EP-A2- 0 685 708     US-A1- 2004 161 575**

• **N BONOD, S ENOCH, L LI, E POPOV, M NEVIERE: "RESONANTOPTICAL TRANSMISSION THROUGH THIN METALLIC FILMS WITH AND WITHOUT HOLES" OPTICS EXPRESS, Bd. 11, Nr. 5, 10. März 2003 (2003-03-10), Seiten 482-490, XP002418319**
• **PIGEON F ET AL: "Identity of long-range surface plasmons along asymmetric structures and their potential for refractometric sensors" JOURNAL OF APPLIED PHYSICS, AMERICAN INSTITUTE OF PHYSICS. NEW YORK, US, Bd. 90, Nr. 2, 15. Juli 2001 (2001-07-15), Seiten 852-859, XP012053851 ISSN: 0021-8979**

**Beschreibung**

Die Erfindung betrifft einen Informationsträger.

Bekannt sind Informationsträger, insbesondere scheibenförmige Informationsträger, welche aus einem Substrat, beispielsweise Glas, mit einer Befestigungsöffnung bestehen, wobei auf dem Substrat eine Metallschicht angeordnet ist. Umlaufend sind auf dem Informationsträger Spuren angeordnet, wobei mehrere Spuren konzentrisch zueinander verlaufen. Die Spuren weisen Kennzeichen auf, welche mit Hilfe einfallenden Lichts detektierbar sind und zur Bestimmung der relativen Position des Informationsträgers zu einem Bezugspunkt, beispielsweise einer Auswerteeinheit, dienen. Die Kennzeichen sind in der Regel so ausgebildet, dass sie das Licht durchlassen; die Bereiche zwischen den Kennzeichen absorbieren oder reflektieren das Licht oder umgekehrt. Je nachdem, ob ein Durchlichtverfahren zur Bestimmung der relativen Position oder ein Reflexlichtverfahren verwendet wird, wird das durchgelassene oder das reflektierte Licht detektiert.

Um diese Kennzeichen herstellen zu können, wird die Oberfläche des Informationsträgers mit einer Metallschicht beschichtet, welche unterschiedlichen photolithographischen und chemischen Strukturierungsschritten unterzogen werden muss. Zusätzlich ist jedoch ein weiterer Fertigungsschritt vonnöten, in welchem die Befestigungsöffnung des Informationsträgers gefertigt wird. Einerseits sind somit mehrere Fertigungsschritte nötig, welche zu hohen Fertigungskosten führen. Andererseits sind die zuvor beschriebenen Fertigungsschritte voneinander unabhängig, so dass es schwierig ist, die Befestigungsöffnung in der gewünschten relativen Lage zur Spur, insbesondere exakt konzentrisch zur Spur mit den Kennzeichen anzuordnen.

Die DE 10 2004 011 146 A1 beschreibt einen Drehgeber, bei welchem die Kennzeichen aus demselben Material gebildet werden wie das Material des Substrats des Informationsträgers. Auf diese Weise ist es möglich, den Informationsträger im Spritzgussverfahren herstellen zu können, um eine exakte Ausrichtung der Kennzeichen zur Befestigungsöffnung zu ermöglichen. Die Kennzeichen werden durch Erhöhungen oder Vertiefungen gegenüber der Substratoberfläche gebildet. Dadurch ergeben sich Laufzeitunterschiede der senkrecht einfallenden Lichtstrahlen, welche zu einer detektierbaren Interferenz der einzelnen Lichtstrahlen führt. Die Kennzeichen ergeben somit ein von dem verbleibenden Bereich des Informationsträgers verschiedenes Lichtsignal und können auf diese Weise detektiert werden. Nachteilig bei diesem Verfahren ist, dass zur Ausnutzung des Interferenzeffekts eine kohärente Lichtquelle vonnöten ist.

Das Dokument EP0685708 A2 beschreibt einen Informationsträger gemäß dem Oberbegriff des Anspruchs 1 für einen Drehgeber.

Die Aufgabe der Erfindung besteht daher darin, einen Informationsträger bereitzustellen, welcher einfach und kostengünstig herzustellen ist, eine hohe Genauigkeit in der Ausrichtung der Spuren zur Befestigungsöffnung ermöglicht und insbesondere auch die Verwendung einer üblichen Lichtquelle wie beispielsweise einer Leuchtdiode zur Erzeugung des verwendeten Lichts zulässt.

Die Aufgabe der Erfindung wird gelöst durch einen Informationsträger mit den Merkmalen des Patentanspruchs 1.

Vorteilhafte Ausgestaltungen und Weiterbildungen der Erfindung sind in den Unteransprüchen angegeben.

Der erfindungsgemäße Informationsträger besteht aus einer Metallschicht mit wenigstens einer Spur, in welcher Kennzeichen angeordnet sind, welche mittels von einer Lichtquelle emittierten Lichts der zentralen Wellenlänge $\lambda$, welches unter einem Winkel $\Theta_i$ auf den Informationsträger einfällt, detektierbar sind und aus welchen die Position des Informationsträgers relativ zu einem Bezugspunkt ableitbar ist. Die Kennzeichen werden durch mit wenigstens mit ersten Strukturen einer Gitterperiode $\Lambda$ strukturierte Bereiche gebildet, welche auf der Unterseite und/oder auf der Vorderseite der Metallschicht angeordnet sind. Die Gitterperiode $\Lambda$ der ersten Strukturen genügt der Gleichung $\Lambda = \lambda/(n_p{}^* - \sin(\Theta_i))$ oder der Gleichung $\Lambda = \lambda/(n_p{}^* + \sin(\Theta_i))$, wobei $\lambda$ die zentrale Wellenlänge des verwendeten Lichts, $\Theta_i$ den Winkel, unter welchem das Licht der Lichtquelle auf den Informationsträger einfällt, und $n_p{}^*$ den effektiven Index eines Plasmonmodes entlang der Metallschicht bezeichnet.

Die Ausgestaltung der Kennzeichen mit Strukturen einer bestimmten Gitterperiode $\Lambda$ ermöglicht die Verwendung des Effekts der langreichweitigen und kurzreichweitigen Plasmonmoden, welche sich entlang einer dünnen Metallschicht, welche auf zumindest einer Seite strukturiert ausgebildet ist, ausbreiten und eine Transmission von Licht durch die Metallschicht erlauben (vgl. F. Pigeon et al.: "Identity of long-range surface plasmons along asymmetric structures and their potential for refractometric sensors", Journal of Applied Physics, Vol. 90, No. 2, Seiten 852 - 859 und N. Bonod et al.: "Resonant optical transmission through thin metallic films with and without holes", Optics Express, Vol. 11, No. 5, Seiten 482 - 490). Dieser Effekt ermöglicht es insbesondere, eine gewöhnliche, kostengünstige Lichtquelle wie beispielsweise eine Leuchtdiode der zentralen Wellenlänge $\lambda$ zu verwenden, um die Kennzeichen des Informationsträgers zu detektieren.

Ist der Informationsträger als Metallschicht ausgebildet, ist der Herstellungsprozess zwar aufwändiger als bei der Anordnung der Metallschicht auf einem stützenden Substrat, allerdings kann das Material für das Substrat eingespart werden.

Bei einer besonders bevorzugten Ausführungsform der Erfindung ist jedoch die Metallschicht auf einem Substrat angeordnet. Bei dieser Ausführungsform ist das Substrat des Informationsträgers in bekannten Herstellungsverfahren einfach und kostengünstig herstellbar. Zudem kann die Metallschicht durch bekannte Verfahren ebenfalls einfach und kostengünstig auf das Substrat aufgebracht werden. Sind auf der Unterseite der Metallschicht erste Strukturen angeordnet, sind somit insbesondere auch auf der Vorderseite des Substrats ebenfalls erste Strukturen angeordnet. Diese lassen sich ebenfalls besonders einfach in bekannten Herstellungsverfahren, beispielsweise durch ein Spritzgussverfahren, ausbilden. Insbesondere wird durch das Herstellen des Substrats des Informationsträgers in einem Spritzgussschritt die exakte Ausrichtung der Strukturen der Kennzeichen relativ zu der Befestigungsöffnung des Informationsträgers ermöglicht.

Vorzugsweise beträgt der Winkel $\Theta_i$ 0°, was einem senkrechten Einfall des Lichts entspricht. Daraus folgt insbesondere, dass damit die Gitterperiode $\Lambda$ der ersten Strukturen der Gleichung $\Lambda = \lambda/n_p^*$ genügt. Der senkrechte Lichteinfall gewährleistet eine besonders sichere Detektion der Kennzeichen und ermöglicht einen besonders einfachen geometrischen Aufbau.

Bei einer besonders bevorzugten Ausführungsform der Erfindung weist die Metallschicht eine im Wesentlichen homogene Höhe (h) sowohl in den Kennzeichen als auch außerhalb der Kennzeichen auf. Damit ergibt sich, dass in den Kennzeichen sowohl auf der Vorderseite als auch auf der Unterseite der Metallschicht die ersten Strukturen angeordnet sind, wobei diese auf der Vorderseite und der Unterseite parallel verschoben verlaufen, so dass sich eine gewellte Metallschicht ergibt. Eine derartige Metallschicht ist bei Anordnung auf einem Substrat besonders einfach herzustellen, da auf das dann auch entsprechend mit ersten Strukturen versehene Substrat eine homogene Metallschicht aufgebracht werden muss, was durch bekannte Verfahren wie beispielsweise Aufdampfverfahren besonders einfach und kostengünstig möglich ist.

Bei einer besonders bevorzugten Ausführungsform der Erfindung sind die ersten Strukturen der strukturierten Bereiche sinusförmig ausgebildet. Diese Strukturen sind besonders einfach herzustellen und ermöglichen eine besonders gute Ausbildung der Plasmonmoden entlang der dann sinusförmig gewellt verlaufenden Metallschicht.

Bei einer besonders vorteilhaften Weiterbildung der Erfindung ist die Metallschicht auf dem Substrat und auf der Metallschicht eine dielektrische Schicht angeordnet. Eine der Plasmonmoden, der sogenannte langreichweitige Plasmonmode, erfährt dann besonders geringe Verluste im Metall, wenn die longitudinale Komponente des elektrischen Feldes innerhalb der Metallschicht, vorzugsweise etwa in der Mitte der Metallschicht, einen Vorzeichenwechsel aufweist. Ein derartiger symmetrischer Verlauf der longitudinalen Komponente des elektrischen Feldes ergibt sich insbesondere dann, wenn auf der Vorderseite und der Unterseite der Metallschicht jeweils ein Dielektrikum mit identischem oder stark ähnlichem Brechungsindex angeordnet ist. Der Verlauf der longitudinalen Komponente des elektrischen Feldes innerhalb der Metallschicht kann daher durch eine auf der Oberfläche der Metallschicht angeordnete dielektrische Schicht beeinflusst werden, insbesondere derart, dass sich besonders gute Bedingungen für die Ausbildung einer Plasmonenwelle ergeben. Vorzugsweise besteht dazu die dielektrische Schicht aus Tantalpentoxid, Aluminiumoxid, Titanoxid, Hafniumoxid, Polycarbonat oder dem Material des Substrats. Besteht die dielektrische Schicht aus dem Material des Substrats, ergibt sich ein symmetrischer Aufbau. Die Dicke der dielektrischen Schicht muss dabei nicht einer definierten Dicke entsprechen, sondern beträgt vorzugsweise mindestens etwa zweimal bis dreimal mehr als die Eindringtiefe der Plasmonenwelle in das Material. Besteht die dielektrische Schicht aus einem anderen Material als das Material des Substrats, muss die dielektrische Schicht eine definierte Dicke in Abhängigkeit von dem Material und der zentralen Wellenlänge $\lambda$ des verwendeten Lichts aufweisen, um den Verlauf der longitudinalen Komponente des elektrischen Feldes entsprechend wie zuvor ausgeführt zu beeinflussen.

Bei einer bevorzugten Ausführungsform der Erfindung beträgt die zentrale Wellenlänge $\lambda$ des verwendeten Lichts etwa 890 nm. Hierbei handelt es sich um eine handelsübliche Leuchtdiode, welche besonders kostengünstig ist.

Vorzugsweise weisen die ersten Strukturen eine Tiefe d auf, welche weniger als die Gitterperiode $\Lambda$, vorzugsweise etwa $1/5^* \Lambda$ bis $1/8^* \Lambda$, vorzugsweise - insbesondere bei Verwendung einer Lichtquelle mit einer zentralen Wellenlänge $\lambda$ von etwa 890 nm - etwa 60 nm bis 130 nm beträgt. Dies begünstigt ebenfalls die Ausbildung der Plasmonmoden und eine möglichst hohe Transmission des einfallenden Lichts.

Vorteilhafterweise besteht die Metallschicht aus einem Metall, welches in dem Wellenlängenbereich des verwendeten Lichts eine geringe Absorption aufweist. In den nicht strukturierten Bereichen außerhalb der Kennzeichen, in welchen die Metallschicht eben verläuft, ist somit gewährleistet, dass das einfallende Licht ausreichend absorbiert und/oder reflektiert wird, so dass die Kennzeichen zuverlässig detektiert werden können. Allerdings bewirkt die geringe Absorption, dass ausreichend einfallendes Licht für eine resonante Transmission durch die Metallschicht in den strukturierten Bereichen der Kennzeichen zur Verfügung steht.

Vorzugsweise besteht die Metallschicht aus Gold, Silber, Kupfer oder Aluminium, da sich diese Metalle die gewünschten optischen Eigenschaften in besonderem Maße aufweisen und zusätzlich sich gegebenenfalls gut auf die Oberfläche des Substrats des Informationsträgers aufbringen lassen.

Bei einer besonders vorteilhaften Ausbildung der Erfindung weist die Metallschicht eine Höhe h auf, welche etwa der Eindringtiefe der Plasmonenwelle entspricht und welche vorzugsweise etwa 20 bis 60 nm beträgt. Nur dadurch ist gewährleistet, dass sich die Plasmonenwelle ungehindert entlang der Metallschicht ausbreiten kann, um eine Transmission des einfallenden Lichts in den strukturierten Bereichen und eine geringe Transmission in den nicht strukturierten Bereichen zu ermöglichen.

Vorzugsweise weist die Rückseite des Informationsträger ein polarisierendes Gitter auf, dessen Strukturen in ihren Dimensionen den ersten Strukturen entsprechen und dessen Strukturen parallel zu den ersten Strukturen angeordnet sind. Dazu fällt insbesondere das Licht der Lichtquelle senkrecht auf den Informationsträger. Eine Plasmonenwelle kann nur durch die polarisierte Komponente des einfallendes Lichts angeregt werden, deren magnetischer Feldvektor parallel zu den ersten Strukturen verläuft. Dies bewirkt, dass bei Verwendung von nicht polarisiertem Licht der Kontrast zwischen den strukturierten und den nicht strukturierten Bereichen im Vergleich zur Verwendung von polarisiertem Licht geringer ist. Die Ausbildung eines polarisierenden Gitters polarisiert das einfallende Licht entsprechend und gewährleistet, dass der Kontrast zwischen den strukturierten und den nicht strukturierten Bereichen möglichst groß ist. Um diese Ausführungsform verwenden zu können, sollte das Licht vorzugsweise von der Rückseite des Informationsträgers her einfallen, damit das einfallende Licht zunächst polarisiert wird, bevor es auf die ersten Strukturen der strukturierten Bereiche fällt.

Vorzugsweise sind senkrecht zu den ersten Strukturen zweite Strukturen angeordnet, welche in ihren Dimensionen den ersten Strukturen entsprechen. Diese bewirken, insbesondere, wenn das Licht senkrecht auf den Informationsträger auftrifft, dass ein zusätzliches polarisierendes Gitter, entweder auf der Rückseite des Informationsträgers oder separat zum Informationsträger, nicht vonnöten ist, da jede polarisierte Komponente eines unpolarisierten Lichtstrahls an einen Plasmonmode koppelt und somit die gewünschte Transmission des Lichts durch die Metallschicht ermöglicht.

Vorteilhafterweise ist die Metallschicht auf dem Substrat und zwischen dem Substrat und der Metallschicht eine Haftschicht angeordnet, um die Haftung zwischen der Metallschicht und dem Substrat, insbesondere bei Verwendung von Gold für die Metallschicht, zu verbessern. Diese Haftschicht ist vorzugsweise so dünn ausgebildet, dass sie keinen optischen Einfluss hat. dazu weist sie vorzugsweise eine Dicke von nur wenigen Nanometern auf. Besonders gut geeignet für eine derartige Haftschicht ist Titanoxid oder ein anderes Material, welches nur geringe optische Verluste aufweist.

Vorteilhafterweise absorbieren die nicht strukturierten Bereiche, d. h. die Bereiche außerhalb der Kennzeichen, das einfallende Licht. Damit ist der Informationsträger insbesondere für das Durchlichtverfahren geeignet, da die Kennzeichen lichtdurchlässig und die nicht strukturierten Bereiche im wesentlichen lichtundurchlässig sind. Dabei sollte vorzugsweise jedoch die Absorption nicht zu hoch sein, da ansonsten auch die Transmission durch die strukturierten Bereiche geschwächt wird. Die Lichtquelle kann somit auf der einen Seite des Informationsträgers angeordnet werden, während von der Rückseite her ein Lichtdetektor, beispielsweise eine oder mehrere Photodioden angeordnet sind, die je nach Einfallsort des Lichts auf den Informationsträger das durch die strukturierten Bereiche durchgelassene Licht detektieren oder feststellen, dass aufgrund der Absorption in den nicht strukturierten Bereichen das Licht auf einen Bereich zwischen den Kennzeichen trifft.

Bei einer vorteilhaften Ausgestaltung der Erfindung sind die ersten Strukturen in sämtlichen Kennzeichen des Informationsträgers parallel zueinander verlaufend angeordnet. Dadurch ergibt sich ein besonders einfaches Herstellungsverfahren.

Vorzugsweise ist der Informationsträger scheibenförmig und die Spur umlaufend angeordnet. Damit kann der Informationsträger als Codescheibe in Drehgebern verwendet werden.

Bei einer derartigen Codescheibe sind vorzugsweise die ersten Strukturen in sämtlichen Kennzeichen des Informationsträgers im Wesentlichen radial oder im Wesentlichen konzentrisch verlaufend angeordnet sind, wobei die ersten Strukturen innerhalb eines Kennzeichens im Wesentlichen parallel zueinander verlaufen.

Vorteilhafterweise ist das Substrat des Informationsträgers im Spritzgussverfahren hergestellt, da dieses Herstellungsverfahren einerseits besonders kostengünstig, andererseits jedoch auch technisch ausgereift ist.

Vorzugsweise wird ein Informationsträger nach einem der vorhergehenden Ansprüche in einem linearen oder rotatorischen Encoder zur Bestimmung der relativen Position des Informationsträgers in Bezug auf einen Bezugspunkt, insbesondere zur Messung der Translations- oder der Drehbewegung, verwendet.

Die Erfindung wird anhand der nachfolgenden Figuren ausführlich erläutert. Es zeigt

Figur 1a    einen Querschnitt durch ein Kennzeichen eines Infor- mationsträgers mit einem Substrat und einer darauf angeordneten Metallschicht,

Figur 1b    einen Querschnitt durch ein Kennzeichen einer weite- ren Ausführungsform eines Informationsträgers,

Figur 1c    einen Querschnitt durch ein Kennzeichen einer weite- ren Ausführungsform eines Informationsträgers,

Figur 1d    einen Querschnitt durch ein Kennzeichen einer weite- ren Ausführungsform eines Informationsträgers,

Figur 1e     einen Querschnitt durch ein Kennzeichen einer weite- ren Ausführungsform eines Informationsträgers,

Figur 1f     einen Querschnitt durch ein Kennzeichen einer weite- ren Ausführungsform eines Informationsträgers,

Figur 2     einen Querschnitt eines Informationsträgers mit einem Substrat mit Kennzeichen sowie eine Draufsicht auf drei alternative Ausführungsformen der Vorderseite des Informationsträgers,

Figur 3     einen Querschnitt eines Informationsträgers mit sche- matisch dargestellter Lichtquelle und externem Pola- risationsfilter,

Figur 4     einen Querschnitt eines Informationsträgers mit einer Draufsicht auf die Rückseite und die Vorderseite des Informationsträgers,

Figur 5     eine alternative Ausführungsform der Rückseite des Informationsträgers gemäß Figur 4,

Figur 6a     eine Draufsicht auf die Vorderseite des Informations- trägers gemäß einer weiteren Ausführungsform,

Figur 6b     eine alternative Ausführungsform der Vorderseite des Informationsträgers gemäß Figur 6a,

Figur 7a     einen Querschnitt eines Informationsträgers mit Lichtquelle und Lichtdetektor im Durchlichtverfahren,

Figur 7b     einen Querschnitt eines Informationsträgers mit Lichtquelle und Lichtdetektor im Reflexlichtverfah- ren,

Figur 8     eine schematische Draufsicht auf einen strukturierten Bereich mit senkrecht zueinander stehenden ersten und zweiten Strukturen,

Figur 9a     eine schematische Darstellung der Verhältnisse bei Lichteinfall unter einem Winkel $\Theta_i$ und Vorwärtskopp- lung und

Figur 9b     eine schematische Darstellung der Verhältnisse bei Lichteinfall unter einem Winkel $\Theta_i$ und Rückwärtskopp- lung.

Gleiche Bezugsziffern in den unterschiedlichen Figuren bezeichnen identische oder im Wesentlichen gleiche Teile.

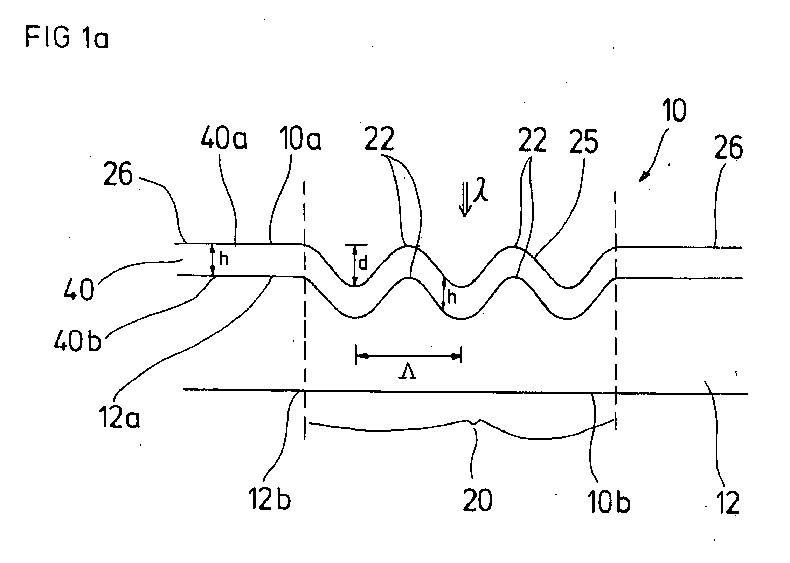

In Figur 1a ist ein Querschnitt durch einen Teilbereich eines Informationsträgers 10 mit einer Vorderseite 10a und einer Rückseite 10b dargestellt, welcher ein Substrat 12 mit einem Brechungsindex $n_s$ aufweist, auf dessen Vor- derseite 12a eine Metallschicht 40 der Höhe h angeordnet ist. Das Substrat 12 besteht beispielsweise aus Glas oder Kunststoff, vorzugsweise aus PMMA, welches auch im Spritzgussverfahren verarbeitet werden kann. Der Informationsträger 10 weist ein Kennzeichen 20 auf, welches aus einem mit ersten Strukturen 22 versehenen strukturierten Bereich 25 gebildet wird. Dabei sind in der vorliegenden Ausführungsform die Strukturen 22 sowohl an der Vorderseite 40a als auch an der Unterseite 40b der Metallschicht 40 und damit an der Vorderseite 12a des Substrats 12 ausgebildet. Die ersten Strukturen 22 in dem strukturierten Bereich 25 sind mit einer Gitterperiode $\Lambda$ und zueinander parallel verlaufend angeordnet und vorzugsweise sinusförmig ausgebildet. Dabei weisen die ersten Strukturen 22 eine Tiefe d auf. Da die Metallschicht 40 über die gesamte Oberfläche 10a des Informationsträgers 10 eine homogene Höhe h aufweist, ist die Metallschicht 40 in dem strukturierten Bereich 25 wellenförmig, insbesondere sinusförmig ausgebildet, wobei die Tiefe d der ersten Strukturen 22 der Metallschicht 40 der Tiefe d der ersten Strukturen 22 und die Gitterperiode $\Lambda$ der Metall- schicht 40 der Gitterperiode $\Lambda$ der ersten Strukturen 22 des Substrats 12 entspricht. An das Kennzeichen 20 grenzen Bereiche 26 an, welche nicht strukturiert sind; dort verläuft die Oberfläche des Informationsträgers 10 eben.

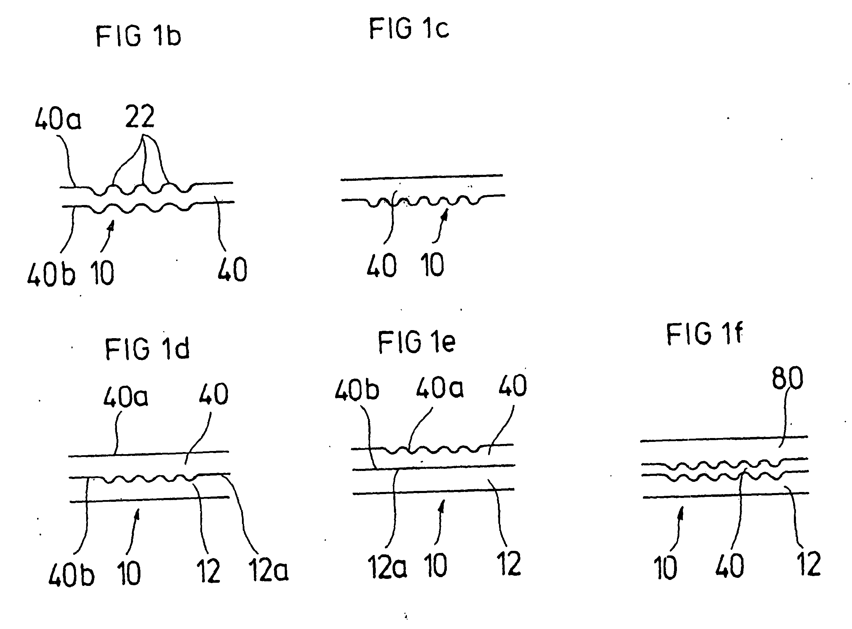

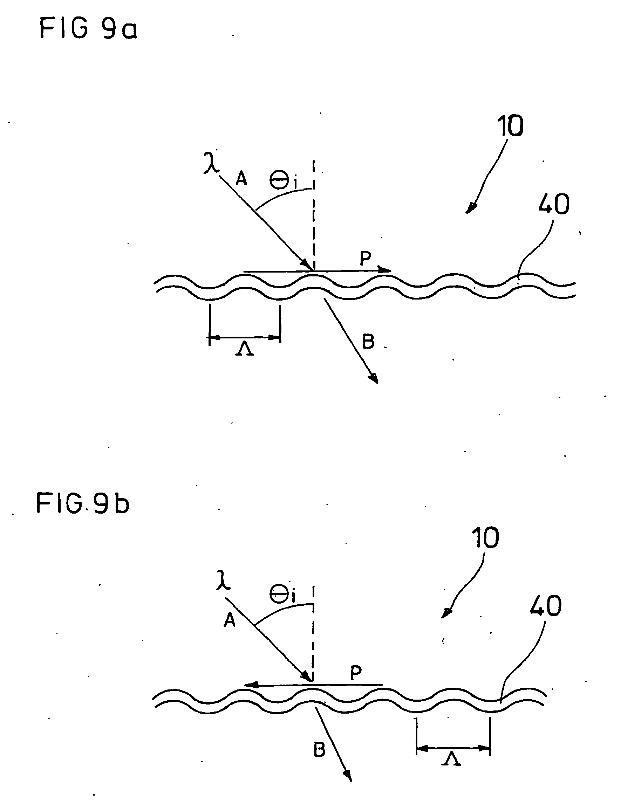

Die Metallschicht 40 ist derart ausgebildet, dass einfallendes Licht der zentralen Wellenlänge $\lambda$ an eine Plas- monenwelle koppelt, welche wiederum in transmittiertes Licht umgesetzt wird. In den Figuren 9a und 9b sind schematisch die Verhältnisse bei Einfall des Lichts der Wellenlänge $\lambda$ auf die Metallschicht 40 unter einem Winkel $\Theta_i$ gegenüber der Normalen auf der Vorderseite 10a des Informationsträgers 10 dargestellt. Fällt das Licht unter dem Winkel $\Theta_i$ nicht direkt auf die Metallschicht 40, sondern auf das Substrat 12 oder auf eine wie nachfolgend anhand von Figur 1f beschriebene dielektrische Schicht 80 auf die Metallschicht 40 ein, wird das Licht bei Durchgang durch das Substrat 12 bzw. die dielektrische Schicht 80 entsprechend gebrochen. Je nach Gitterperiode $\Lambda$ koppelt das einfallende Licht nur in eine Richtung entlang der Metallschicht 40. In Figur 9a ist der Fall der sogenannten Vorwärtskopplung, in Figur 9b der Fall der sogenannten Rückwärtskopplung dargestellt. Das einfallende Licht ist dabei durch den mit A bezeichneten Pfeil, das transmittierte Licht durch den mit B bezeichneten Pfeil und die Richtung der eingekoppelten Plasmonwelle durch den mit P bezeichneten Pfeil dargestellt. Im Falle der Vorwärtskopplung genügt die Gitterperiode $\Lambda$ der Gleichung $\Lambda = \lambda/(n_p^* - \sin(\Theta_i))$, im Falle der Rückwärtskopplung der Gleichung $\Lambda = \lambda/(n_p^* + \sin(\Theta_i))$, wobei $n_p^*$ den effektiven Index eines Plasmonmodes entlang der Metallschicht 40 bezeichnet.

In Figur 1a ist der Sonderfall von senkrecht auf die Vorderseite 10a des Informationsträgers 10 einfallendem Licht dargestellt. In diesem Fall genügt die Gitterperiode $\Lambda$ der ersten Strukturen 22 dazu der Gleichung $\Lambda = \lambda/n_p^*$, wobei $\lambda$ die zentrale Wellenlänge des verwendeten Lichts und $n_p^*$ den effektiven Index eines Plasmonmodes entlang der Metallschicht 40 bezeichnet. Das einfallende Licht koppelt dabei in beide Richtungen entlang der Metallschicht 40.

Die Metallschicht 40 besteht vorzugsweise aus Gold, Silber, Kupfer oder Aluminium, da diese Metalle besonders gut zur Ausbildung von Plasmonenwellen geeignet sind. Zwischen der Metallschicht 40 und dem Substrat 12 kann eine nicht dargestellte Haftschicht angeordnet werden, die der besseren Haftung der Metallschicht 40 auf dem Substrat 12 dient, die jedoch nicht notwendigerweise vorhanden sein muss. Die Haftschicht sollte so dünn ausgebildet sein, dass sie keinen optischen Einfluss hat. Dazu weist die Haftschicht beispielsweise eine Dicke von nur wenigen, beispielsweise weniger als 10nm, auf. Die Haftschicht besteht beispielsweise aus Titanoxid, welches insbesondere für Metallschichten 40 aus Gold eine gute Haftung vermittelt, oder einem anderen Material, welches nur geringe optische Verluste aufweist.

Die Höhe h der Metallschicht 40 ist weiterhin vorzugsweise so ausgebildet, dass sie etwa der Eindringtiefe der Plasmonenwelle in die Metallschicht 40 entspricht, damit das Feld des Plasmonmodes an beiden Grenzschichten der Metallschicht intensiv vorhanden ist, um die Transmission des Lichts durch die Metallschicht 40 zu ermöglichen. Dazu beträgt die Höhe h der Metallschicht 40 vorzugsweise zwischen 20 nm und 60 nm. Damit sich die Plasmonenwelle in optimierter Weise in der Metallschicht 40 ausbilden kann, sollte vorzugsweise auch die Tiefe d der ersten Strukturen 22 auf die zentrale Wellenlänge $\lambda$ des einfallenden Lichts angestimmt und insbesondere deutlich kleiner als die Gitterperiode $\Lambda$ sein, beispielsweise nur etwa $1/5^* \, \Lambda$ bis $1/8^* \, \Lambda$, vorzugsweise zwischen 60 nm und 130 nm betragen. Insbesondere, wenn die Gitterperiode $\Lambda$ zwischen 60 nm und 130 nm beträgt, kann eine Plasmonenwelle mit Licht einer handelsüblichen Leuchtdiode, beispielsweise einer Leuchtdiode mit einer zentralen Wellenlänge des emittierten Lichts von $\lambda = 890$ nm, erzeugt werden. Je nach verwendeter Lichtquelle, die beispielsweise auch zentrale Wellenlängen im Bereich von 500 nm bis 1550 nm aufweisen können, skalieren jedoch die Dimensionen der ersten Strukturen 22, wobei die Höhe h der Metallschicht 40 jedoch im wesentlichen in der gleichen Größenordnung verbleibt.

In den Figuren 1b bis 1f sind weitere Ausführungsformen eines Informationsträgers 10 dargestellt. Die Figuren 1b und 1c zeigen den Informationsträger 10, der im wesentlichen aus der Metallschicht 40 gebildet ist und kein Substrat 12 aufweist. Derartige Informationsträger 10 sind aufwändig herzustellen, bieten jedoch den Vorteil, dass kein Material für das Substrat benötigt wird. Zudem ist das Dielektrikum auf der Vorderseite 40a und der Unterseite 40b der Metallschicht 40 identisch, nämlich Luft, so dass sich die Plasmonmoden besonders gut ausbilden können. Bei der Ausführungsform gemäß Figur 1b sind sowohl auf der Vorderseite 40a als auch der Unterseite 40b der Metallschicht 40 erste Strukturen 22 angeordnet, während bei der Ausführungsform gemäß Figur 1c eine Seite 40a, 40b der Metallschicht eben ist und die ersten Strukturen 22 nur in der anderen Seite 40b, 40a ausgebildet sind. Die Figuren 1d bis 1f zeigen den Informationsträger mit dem Substrat 12 und der Metallschicht 40. In der Ausführungsform gemäß Figur 1d sind die ersten Strukturen 22 in der Unterseite 40b der Metallschicht 40 und somit auch in der Vorderseite 12a des Substrats 12 ausgebilde, während die Vorderseite 40a der Metallschicht 40 eben ausgebildet ist. In der Ausführungsform gemäß Figur 1e sind die ersten Strukturen 22 nur in der Vorderseite 40a der Metallschicht 40 ausgebildet, während die Unterseite 40b der Metallschicht 40 und somit auch die Vorderseite 12a des Substrats 12 eben ausgebildet ist. Die Ausführungsform gemäß Figur 1f zeigt den Informationsträger mit dem Substrat 12 und der Metallschicht 40, bei welcher sowohl in der Vorderseite 40a als auch in der Unterseite 40b die ersten Strukturen 22 ausgebildet sind, wobei zusätzlich auf der Vorderseite der Metallschicht 40 eine dielektrische Schicht 80 angeordnet ist, Die dielektrische Schicht 80 dient dazu, besonders gute Bedingungen für die Ausbildung einer Plasmonenwelle bereitzustellen. Die Plasmonenwelle ist dann besonders stark ausgeprägt, wenn die longitudinale Komponente des elektrischen Feldes innerhalb der Metallschicht 40, vorzugsweise etwa in der Mitte der Metallschicht 40, einen Vorzeichenwechsel aufweist. Der Verlauf der longitudinalen Komponente des elektrischen Feldes wird durch das Substrat 12 und gegebenenfalls die auf der Oberfläche der Metallschicht 40 angeordnete dielektrische Schicht 80 beeinflusst, insbesondere durch Wahl eines geeigneten Materials mit einem geeigneten Brechungsindex und einer geeigneten Dicke der dielektrischen Schicht 80. Um den Verlauf der longitudinalen Komponente des elektrischen Feldes symmetrisch auszubilden, werden vorzugsweise Dielektrika mit gleichen oder ähnlichen Brechungsindizes verwendet. Besonders geeignet zur Ausbildung einer ausgeprägten Plasmonenwelle ist daher die Ausführungsform gemäß Figur 1b, da sich in diesem Fall auf beiden Seiten der Metallschicht 40 Luft befindet, so dass sich ein perfekt symmetrischer Aufbau ergibt. Ist die Metallschicht 40 jedoch wie in Figur 1f auf einem Substrat 12 angeordnet, besteht vorzugsweise zur geeigneten Beeinflussung des Verlaufs der longitudinalen Komponente des elektrischen Feldes die dielektrische Schicht 80 aus Tantalpentoxid, Aluminiumoxid, Titanoxid, Hafniumoxid oder Polycarbonat oder dem Material des Substrats 12, beispielsweise PMMA. Besteht die dielektrische Schicht aus dem Material des Substrats, ergibt sich ein symmetrischer Aufbau. Die Dicke der dielektrischen Schicht 80 muss dabei nicht einer definierten Dicke entsprechen, sondern beträgt vorzugsweise mindestens etwa zweimal bis dreimal mehr als die Eindringtiefe der Plasmonenwelle in das Material. Besteht die dielektrische Schicht 80 aus einem anderen Material als das Material des Substrats 12 , muss die dielektrische Schicht 80 eine definierte Dicke in Abhängigkeit von dem für die dielektrische Schicht 80 verwendeten Material und der zentralen Wellenlänge $\lambda$ des verwendeten Lichts aufweisen, um den Verlauf der longitudinalen Komponente des elektrischen Feldes entsprechend zu beeinflussen.

In den im wesentlichen symmetrisch ausgebildeten Informationsträgern 10, d. h. in dem Fall, dass der Informationsträger 10 nur aus der Metallschicht 40 oder in dem Fall, dass der Informationsträger 10 aus der auf dem Substrat 12 angeordneten Metallschicht 40, welche mit der dielektrischen Schicht 80 bedeckt ist, besteht, wobei die dielektrische Schicht 80 aus demselben Material wie das Substrat 12 besteht, genügt der effektive Index $n_p^*$ der Näherungsgleichung $n_p^* = n_s\,(\varepsilon_m/(n_s^2+\varepsilon_m))^{1/2}$, wobei $n_s$ im ersten Fall den Brechungsindex von Luft und im zweiten Fall den Brechungsindex des Substrats 12 und $\varepsilon_m$ die Dielektrizitätskonstante der Metallschicht 40 bezeichnet. Dabei handelt es sich um eine Näherung sowohl für den langreichweitigen als auch den kurzreichweitigen Plasmonmode. In der Regel ist der effektive Index $n_p^*$ des langreichweitigen Plasmonmodes etwas kleiner als der gemäß der angegebenen Näherungsformel bestimmte effektiv Index $n_p^*$, während der effektive Index $n_p^*$ des kurzreichweitigen Plasmonmodes etwas größer als der gemäß der angegebenen Näherungsformel bestimmte effektive Index $n_p^*$ ist. Somit kann, sofern die Materialen für das Substrat 12 und die Metallschicht 40 festgelegt und die Leuchtdiode mit festgelegter zentrale Wellenlänge $\lambda$ bestimmt ist, der effektive Index $n_p^*$ und daraus die Gitterperiode $\Lambda$ der ersten Strukturen 22 bestimmt werden.

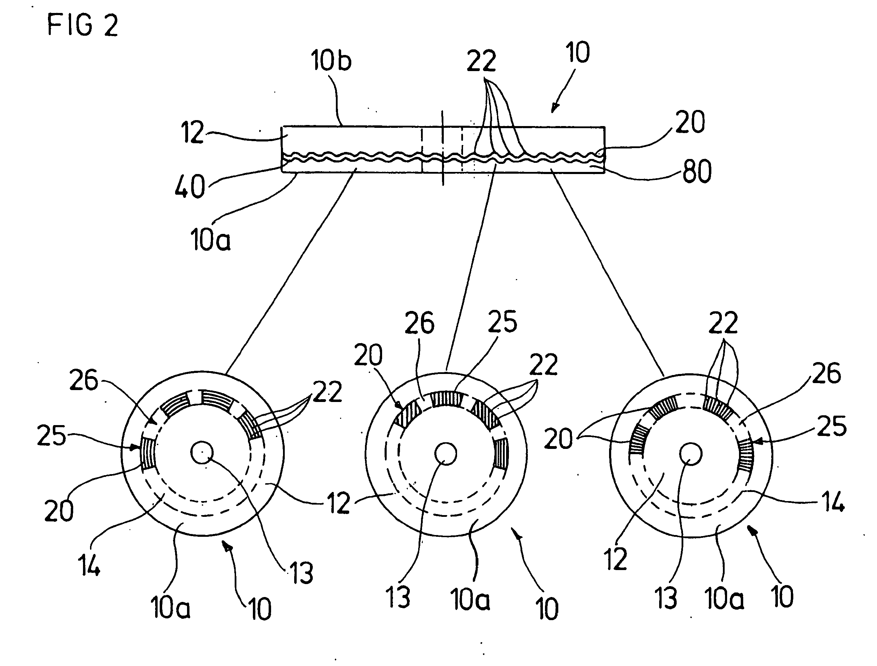

Wie in Figur 2 dargestellt, weist der vollständige Informationsträger 10 auf seiner Vorderseite 10a mehrere Kennzeichen 20 auf, welche durch jeweils einen mit ersten Strukturen 22 strukturierten Bereich 25 gemäß Figur 1a gebildet werden. Weiterhin weist der Informationsträger 10 eine zentrale Befestigungsöffnung 13 zur Montage des Informationsträgers 10 auf. Um die Kennzeichen 20 durch einfallendes Licht der Wellenlänge $\lambda$ detektieren zu können, wird folgender Effekt ausgenutzt: In den nicht strukturierten Bereichen 26 wird das einfallende Licht in der Metallschicht 40 im Wesentlichen absorbiert oder reflektiert. Vorzugsweise besteht die Metallschicht 40 aus einem Metall, welches in dem Wellenlängenbereich des verwendeten Lichts eine geringe Absorption aufweist, um zu gewährleisten, dass zwar in den nicht strukturierten Bereichen 26 das einfallende Licht zumindest teilweise absorbiert oder reflektiert wird, jedoch in den strukturierten Bereichen 25 ausreichend Licht zur resonanten Transmission zur Verfügung steht.

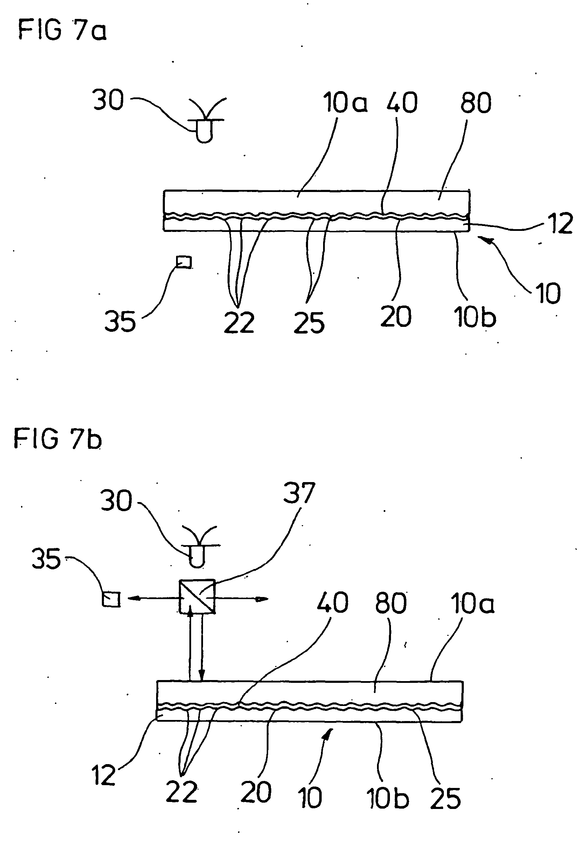

Im Durchlichtverfahren, welches schematisch in Figur 7a dargestellt ist, kann somit, falls das von einer Lichtquelle 30 emittierte Licht auf einen nicht strukturierten Bereich 26 fällt, von dem gegenüber der Lichtquelle 30 auf der anderen Seite des Informationsträgers 10 angeordneten Lichtdetektor 35 nur wenig, im günstigsten Fall kein Licht detektiert werden. Fällt das Licht hingegen auf einen strukturierten Bereich 25, wird in der Metallschicht 40 ein Plasmonenmode angeregt, welcher zu einer Transmission des einfallendes Lichtes durch die Metallschicht 40 und das Kennzeichen 20 führt. Der Lichtdetektor 35 detektiert ein Signal und kann somit das Kennzeichen 20 erkennen.

Sind, wie in Figur 2 dargestellt, in einer Spur 14 abwechselnd mehrere Kennzeichen 20 in strukturierten Bereichen 25 und nicht strukturierte Bereiche 26 angeordnet, kann bei Bewegung des Informationsträgers 10 relativ zur Lichtquelle 30 entlang der Spur 14 die Anzahl der sich vorbeibewegenden Kennzeichen 20 gezählt und daraus eine Information über die relative Lage des Informationsträgers 10 zu einem Bezugspunkt, beispielsweise der Lichtquelle 30, dem Lichtdetektor 35 oder einer Auswerteeinheit, ermittelt werden.

Alternativ zum Durchlichtverfahren kann im Reflexlichtverfahren die relative Lage des Informationsträgers 10 zu einem Bezugspunkt, beispielsweise der Lichtquelle 30 oder einer Auswerteeinheit, ermittelt werden, wie schematisch in Figur 7b dargestellt. In diesem Verfahren wird das von den nicht strukturierten Bereichen 26 reflektierte Licht mittels eines Strahlteilers 37 in einen auf der gleichen Seite des Informationsträgers 10 wie die Lichtquelle 30 angeordneten Lichtdetektor 35 umgelenkt, in welchem es detektiert wird. Fällt das Licht auf ein Kennzeichen 20, wird aufgrund des zuvor beschriebenen Effekts das einfallende Licht transmittiert, so dass kein Signal in dem Lichtdetektor 35 detektiert werden kann.

Ist der Informationsträger 10 wie in Figur 2 dargestellt scheibenförmig ausgebildet, kann er insbesondere als Codescheibe in einem Drehgeber, entweder im Durchlicht- oder im Reflexlichtverfahren, dienen. Alternativ kann der Informationsträger 10 im Wesentlichen rechteckig mit einer linear verlaufenden Spur ausgebildet sein, um als Translationsencoder eingesetzt zu werden.

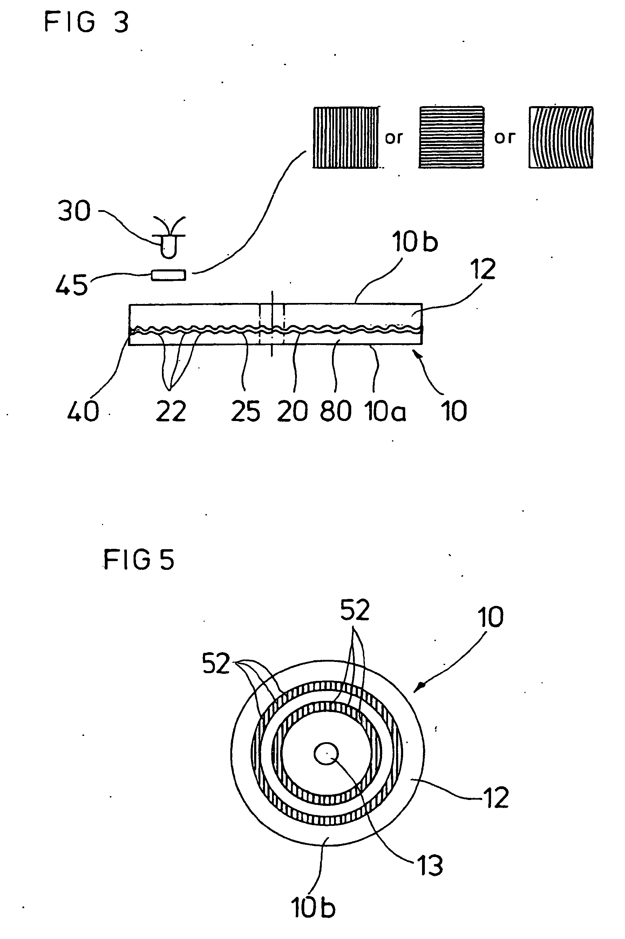

In Figur 2 sind drei alternative Ausführungsformen der Vorderseite 10a des Informationsträgers 10 dargestellt. Die dielektrische Schicht 80 ist bei diesen Draufsichten auf die Vorderseite 10a des Informationsträgers 10 in Figur 2 unberücksichtigt geblieben. Wesentlich für die Erzeugung der Plasmonenwellen in der durch die ersten Strukturen 22 gewellten Metallschicht 40 der Kennzeichen 20 ist, dass die ersten Strukturen 22 parallel zueinander verlaufen und mit einer Gitterperiode $\Lambda$ zueinander angeordnet sind. Die ersten Strukturen 22 können dabei jedoch, wie in Figur 2 dargestellt, bei einem scheibenförmigen Aufbau des Informationsträgers 10 entweder konzentrisch zueinander oder im Wesentlichen radial verlaufend oder in sämtlichen Kennzeichen 20 des Informationsträgers 10 parallel zueinander verlaufend angeordnet werden. Gerade für letztere Variante ist eine Spritzgussform zur Herstellung des Substrats 12 im Spritzgussverfahren besonders einfach herstellbar; diese Variante eignet sich jedoch nicht zur Verwendung in Kombination mit einem externen polarisierenden Gitter wie nachfolgend anhand von Figur 3 beschrieben, da sich die Orientierung der ersten Strukturen 22 relativ zur feststehenden Lichtquelle 30 in jedem Kennzeichen ändert. Je nach Anwendungszweck bieten somit die unterschiedlichen Ausführungsformen unterschiedliche Vorteile.

Die Plasmonenwelle bildet sich im Wesentlichen nur mit polarisiertem Licht aus. Um einen guten Kontrast zwischen den strukturierten Bereichen 25 in den Kennzeichen 20 und den verbleibenden Teilen des Substrats 12 zu erzielen, ist es daher von Vorteil, das einfallende Licht zu polarisieren. Dies kann beispielsweise wie in Figur 3 dargestellt mit Hilfe eines externen polarisierenden Gitters 45 geschehen, bei welchem die Polarisationsebenen parallel zu den ersten Strukturen 22 angeordnet sein müssen, um den gewünschten Effekt zu erzielen. Sind die ersten Strukturen 22 im wesentlichen radial angeordnet, sind die Polarisationsebenen wie in der mittleren Figur dargestellt anzuordnen. Bei Anordnung der ersten Strukturen 22 im wesentlichen senkrecht zur radialen Ausrichtung ergibt sich eine Anordnung der Polarisationsebenen wie in der linken Figur und bei Anordnung der ersten Strukturen 22 im Wesentlichen konzentrisch zueinander ergibt sich eine Anordnung der Polarisationsebenen wie in der rechten Figur in Figur 3 dargestellt.

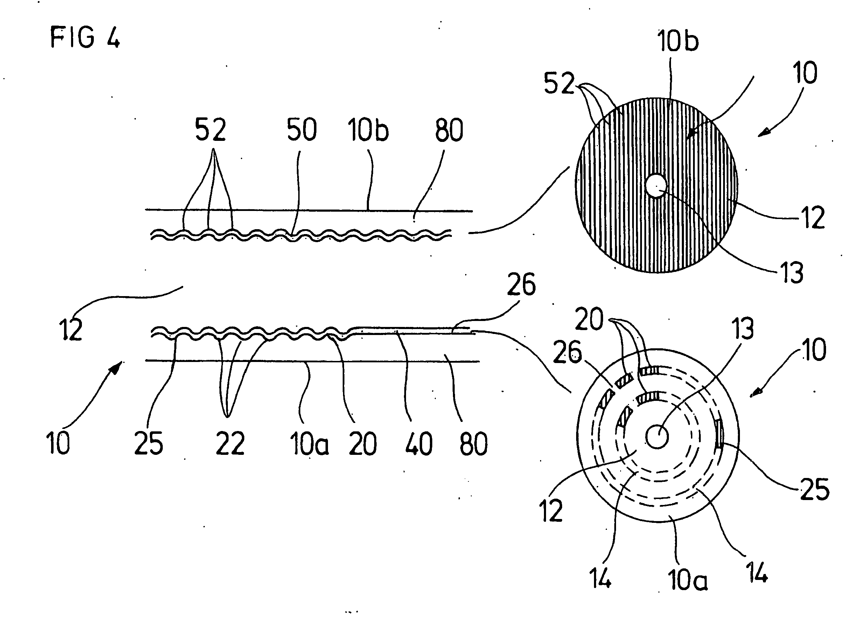

In einer alternativen Ausführungsform, welche in Figur 4 dargestellt ist, kann ein polarisierendes Gitter 50 durch Ausbildung von Strukturen 52, die in ihren Dimensionen den ersten Strukturen 22 entsprechen und parallel zu diesen angeordnet sind, in dem Substrat 12 gebildet werden. Dabei ist das polarisierende Gitter 50 auf der Rückseite 10b des Informationsträgers 10 angeordnet, wie in Figur 4 dargestellt. Sowohl das polarisierende Gitter 50 als auch die Metallschicht 40 sind vorzugsweise mit einer dielektrischen Schicht 80 bedeckt. In Figur 4 ist weiterhin eine Draufsicht auf die Rückseite 10b und eine Draufsicht auf die Vorderseite 10a des Informationsträgers 10 ohne Berücksichtigung der dielektrischen Schichten 80 dargestellt. Dabei ist ersichtlich, dass auf der Vorderseite zwei Spuren 14 konzentrisch zueinander angeordnet sind, in welchen jeweils mehrere durch strukturierte Bereiche 25 gebildete Kennzeichen 20 abwechselnd mit nicht strukturierten Bereichen 26 angeordnet sind. Durch Anordnung mehrerer Spuren 14 auf einem Informationsträger 10 wird die Informationsdichte deutlich erhöht. Das polarisierende Gitter 50, welche auf der Rückseite 10b des Informationsträgers 10 angeordnet ist, ist mit seinen Strukturen 52 parallel zu den ersten Strukturen 22 der Kennzeichen 20 auf der Vorderseite 10b des Informationsträgers 10 ausgerichtet. In dieser Ausführungsform sollte das Licht von der Rückseite 10b des Informationsträgers 10 her auf den Informationsträger 10 einfallen, damit das Licht zunächst polarisiert wird und erst im polarisierten Zustand auf die Metallschicht 40 trifft.

In Figur 5 ist eine alternative Ausführungsform des in der Rückseite 10b des Informationsträgers 10 ausgebildeten polarisierenden Gitters 50 gemäß Figur 4 dargestellt. Es ist ausreichend, das polarisierende Gitter 50 nur in den Abschnitten des Informationsträgers 10 anzuordnen, in welchen das einfallende Licht auch auftrifft und insbesondere auf die Spur 14 trifft.

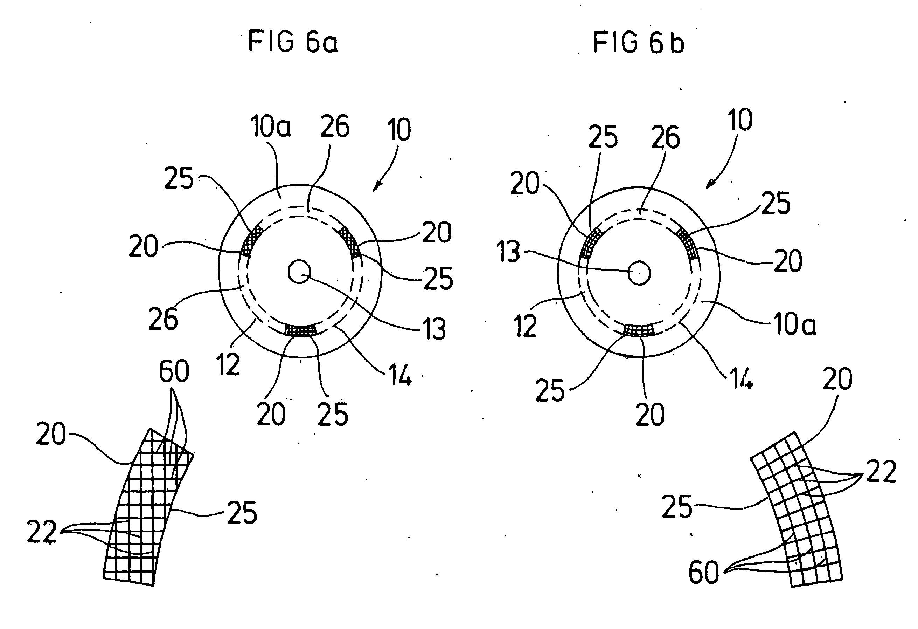

In einer weiteren alternativen Ausführungsform der Erfindung kann eine gute Ausbeute des einfallenden Lichts auch ohne Polarisation des Lichts dadurch erreicht werden, dass in den strukturierten Bereichen 25 senkrecht zu den ersten Strukturen 22 zweite Strukturen 60 ausgebildet sind, welche in ihren Dimensionen etwa den Dimensionen der ersten Strukturen 22 entsprechen (vgl. Figuren 6a und 6b). Es bildet sich somit eine in zwei Dimensionen wellige Struktur in den strukturierten Bereichen 25 aus. Dabei genügt die Höhe Z der wellige Struktur in den strukturierten Bereichen 25 in Abhängigkeit von den Koordinaten x und y vorzugsweise der Gleichung

$$\mathtt{Z(x,y) = H \ (1 + \cos((2)^{-1/2} \ 2\pi/\Lambda \ x) \ \cos((2)^{-1/2} \ 2\pi/\Lambda \ y))} \qquad \mathtt{(I)},$$

wobei H die halbe Höhe der welligen Struktur und $\Lambda$ die Gitterperiode bezeichnet. Alternativ genügt die Höhe Z der in zwei Dimensionen welligen Struktur der Gleichung

$$\mathtt{Z(x,y) = H \ (1 + 0.5 \ \cos(2\pi/\Lambda \ x) + 0.5 \ \cos(2\pi/\Lambda \ y))} \qquad \mathtt{(II)}.$$

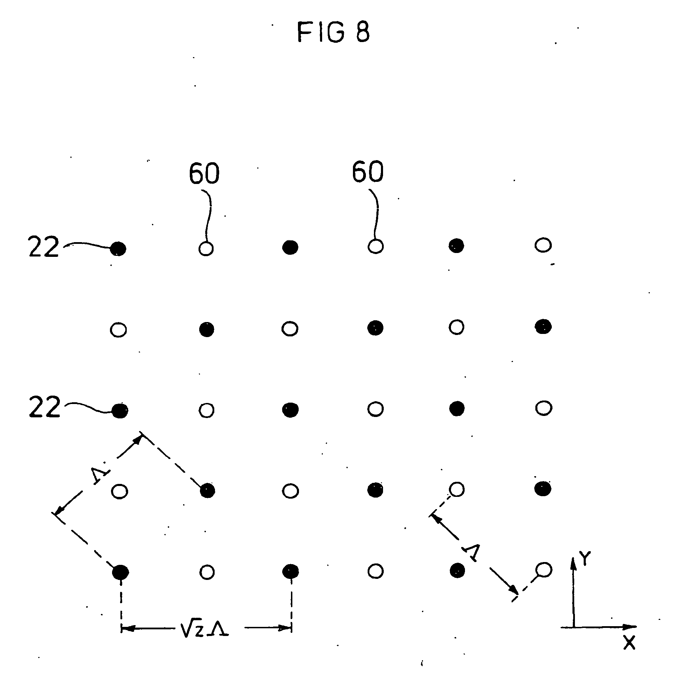

Ein Beispiel für die in zwei Dimensionen wellige Struktur, deren Höhe Z der erstgenannten Gleichung (I) genügt, ist in einer Draufsicht in Figur 8 dargestellt. Der Ausdruck $\cos((2)^{-1/2} \ 2\pi/\Lambda \ x)$ gemäß Gleichung I definiert ein Oberflächenrelief, welches in x-Richtung die Periode $(2)^{-1/2}\Lambda$ aufweist, wobei parallel zur y-Achse gradlinige Gitterlinien verlaufen. Da die Gitterperiode zur Kopplung des einfallenden Lichts an einen Plasmonmode $\Lambda$ ist, ermöglicht dieses Gitter keine Kopplung des Lichts an einen Plasmonenmode. Der Ausdruck $\cos((2)^{-1/2} \ 2\pi/\Lambda \ y)$ gemäß Gleichung I definiert ein Oberflächenrelief, welches in y-Richtung periodisch mit der Periode $(2)^{-1/2}\Lambda$ ist, wobei die Gitterlinien parallel zur x-Achse verlaufen. Auch dieses Gitter ermöglicht keine Kopplung des einfallenden Lichts an einen Plasmonmode, da dazu die Periode des Gitters $\Lambda$ sein müsste. Das Produkt der zwei zuvor erläuterten Ausdrücke resultiert in einem Oberflächenrelief mit Spitzen und Tiefen wie in Figur 8 illustriert, wobei die aus der Papierebene hervorragenden Spitzen durch gefüllte Kreise, die in die Papierebene hineinragenden Tiefen durch offene Kreise dargestellt sind. Die Tiefe des resultierenden Oberflächenreliefs ist 2H.

Dieses resultierende Oberflächenrelief entspricht ersten Strukturen 22 der Periode $\Lambda$, welche im Winkel von 45° gegenüber der x- oder y-Achse, und zweiten Strukturen 60 der Periode $\Lambda$, welche im Winkel von 90° gegenüber den ersten Strukturen 22 angeordnet sind. Dabei weisen die ersten und zweiten Strukturen 22, 60 im Vergleich zu ersten Strukturen 22, welche nicht mit zweiten Strukturen 60 gekreuzt sind, keine gleichförmige Tiefe, sondern eine sinusförmig modulierte Tiefe auf. Die Tiefe 2H des resultierenden Oberflächenreliefs bei einer in zwei Dimensionen welligen Struktur muss daher größer sein als die Tiefe d bei einer nur in einer Dimension welligen Struktur, um den gleichen Effekt der hohen Transmission zu erzielen.

Da die Periode der ersten Strukturen 22 und der zweiten Strukturen 60 $\Lambda$ beträgt, ermöglichen beide Strukturen 22, 60 eine Kopplung des einfallenden Lichts an einen Plasmonmode, nämlich die ersten Strukturen 22 an einen Plasmonmode, welcher etwa im Winkel von 45° gegenüber der positiven x-Achse geneigt verläuft, und die zweiten Strukturen an einen Plasmonmode, welcher im Winkel von 135° gegenüber der positiven x-Achse geneigt verläuft. Daraus folgt, dass das einfallende Licht beliebiger Polarisation eine hohe Transmission durch die in zwei Dimensionen wellige Struktur aufweist.

Bei senkrechtem Lichteinfall genügt die Gitterperiode $\Lambda$ der ersten Strukturen 22 und der zweiten Strukturen 60 der Gleichung $\Lambda = \lambda/n_p{}^*$, wobei $\lambda$ die zentrale Wellenlänge des verwendeten Lichts und $n_p{}^*$ den effektiven Index eines Plasmonmodes entlang der Metallschicht 40 bezeichnet. Dabei ist zu beachten, dass der effektive Index $n_p{}^*$ in einem eindimensional strukturierten Bereich 25 geringfügig von dem effektive Index $n_p{}^*$ in einem zweidimensional strukturierten Bereich 25 abweicht.

Genügt das Oberflächenrelief der in zwei Dimensionen welligen Struktur der Gleichung II und wird somit durch eine Summe zweier periodischer Funktionen beschrieben, koppelt das einfallende Licht an einen Plasmonmode in x-Richtung durch ein periodisches Oberflächenrelief, welches durch den Ausdruck $\cos(2\pi/\Lambda\ x)$ beschrieben wird, und an einen Plasmonmode in y-Richtung durch ein periodisches Oberflächenrelief, welches durch den Ausdruck $\cos(2\pi/\Lambda\ y)$ beschrieben wird.

Wie in Figur 6a und der entsprechenden Ausschnittsvergrößerung dargestellt, können die ersten Strukturen 22 in sämtlichen Kennzeichen 20 parallel zueinander ausgebildet oder, wie in Figur 6b und der entsprechenden Ausschnittsvergrößerung dargestellt, die ersten Strukturen 22 radial und die zweiten Strukturen 60 im Wesentlichen konzentrisch zueinander oder die ersten Strukturen 22 im Wesentlichen konzentrisch zueinander und die zweiten Strukturen 60 radial verlaufend angeordnet sein.

Der Informationsträger 10 der Ausführungsformen gemäß Figur 1a oder 1d bis 1f ist in wenigen Herstellungsschritten herstellbar. Zunächst wird das Substrat 12 in einem Spritzgussverfahren hergestellt. Dabei sind in der entsprechenden Spritzgussform bei den Ausführungsformen gemäß den Figuren 1a, 1d und 1f sowohl die Kennzeichen 20 mit den ersten Strukturen 22 als auch die Befestigungsöffnung 13 und gegebenenfalls die zweiten Strukturen 60 oder die Strukturen 50 eines polarisierenden Gitters 52 gleichzeitig formbar, so dass die Ausrichtung der Kennzeichen 20 in der Spur 14 zu der Befestigungsöffnung 13 mit hoher Genauigkeit erfolgen kann und mühsame Justierschritte entfallen. Anschließend wird die Metallschicht 40 auf die Vorderseite 10a des Informationsträgers 10 aufgebracht, beispielsweise mittels eines Aufdampf- oder eines Sputterprozesses, wobei sich für die Ausführungsformen gemäß der Figuren 1a oder 1f die homogene Dicke h der Metallschicht 40 insbesondere auch im Bereich der Kennzeichen 20 ergibt und die gleichmäßig gewellte Struktur der Metallschicht 40 oberhalb der ersten Strukturen 22 gewährleistet ist. Gegebenenfalls kann die Metallschicht 40 mit einer dielektrischen Schicht 80 wie gemäß der in Figur 1f dargestellten Ausführungsform ebenfalls beispielsweise durch einen Aufdampf- oder einen Sputterprozess bedeckt werden.

Ein erstes Ausführungsbeispiel des Informationsträgers 10 ist aus folgenden Materialien hergestellt und weist die folgenden Dimensionen auf. Das Substrat 12 besteht aus PMMA mit einem Brechungsindex $n_s$ von 1,48 und ist nur in einer Dimension mit den ersten Strukturen 22 strukturiert. Die ersten Strukturen 22 weisen eine Tiefe d von 87 nm und eine Gitterperiode $\Lambda$ von 581 nm auf. Auf die Vorderseite 10a des Informationsträgers 10 wird eine Metallschicht 40 aus Silber mit einer Höhe h von 30 nm aufgebracht, wobei das Silber eine Dielektrizitätskonstante $\varepsilon_m$ von -36 +i2 aufweist. Die Metallschicht 40 ist mit einer dielektrischen Schicht 80 bestehend aus PMMA bedeckt, wobei die Dicke der PMMA-Schicht größer als die Eindringtiefe der Plasmonenwelle in die Metallschicht 40 sein sollte und beispielsweise größer als 2 $\mu$m ist. Als Lichtquelle 30 wird eine Leuchtdiode mit einer zentralen Wellenlänge $\lambda$ von 890 nm verwendet. In dieser Konfiguration ergibt sich durch die strukturierten Bereiche 25 eine Transmission der entsprechend polarisierten Komponente des einfallenden Lichts von mehr als 90%.

Ein zweites Ausführungsbeispiel des Informationsträgers 10 mit zueinander senkrecht stehenden ersten Strukturen 22 und zweiten Strukturen 60 ist aus folgenden Materialien hergestellt und weist die folgenden Dimensionen auf. Das Substrat 12 und die dielektrische Schicht 80 bestehen aus PMMA mit einem Brechungsindex $n_s$ von 1,48. Die ersten Strukturen 22 und die zweiten Strukturen 60 weisen eine Tiefe d von 125 nm und eine Gitterperiode $\Lambda$ von 583 nm auf. Die geringfügige Abweichung der Gitterperiode $\Lambda$ im vorliegenden zweiten Ausführungsbeispiel eines zweidimensional strukturierten Bereichs 25 von 583 nm gegenüber 581 nm im ersten Ausführungsbeispiel resultiert aus den geringen Unterschieden im effektiven Index $n_p{}^*$ für ein- oder zweidimensional strukturierten Bereichen 25. Aus der Gitterperiode $\Lambda$ von 583 nm ergibt sich entlang der x-Achse und der y-Achse in Figur 8 eine Periode von $2^{1/2}\Lambda = 825$ nm. Insbesondere beträgt somit der Höhenunterschied 2H des in zwei Dimensionen welligen Oberflächenreliefs etwa 125 nm. Auf die Vorderseite 10a des Informationsträgers 10 wird eine Metallschicht 40 aus Gold mit einer Höhe h von 45 nm aufgebracht, wobei das Gold eine Dielektrizitätskonstante $\varepsilon_m$ von -36 +j2 aufweist. Als Lichtquelle 30 wird eine Leuchtdiode mit einer zentralen Wellenlänge von 890 nm verwendet. In dieser Konfiguration ergibt sich durch die strukturierten Bereiche 25 eine Transmission der entsprechend polarisierten Komponente des einfallenden Lichts von etwa 80%, während sich außerhalb der strukturierten Bereiche 25 in den flachen Bereichen des Substrats 12 eine Transmission von nur etwa 2,2 % ergibt.

Bezugszeichenliste

| 10   | Informationsträger |
|------|---------------------|
| 10a  | Vorderseite |
| 10b  | Rückseite |
| 12   | Substrat |
| 12a  | Vorderseite |
| 12b  | Rückseite |
| 13   | Befestigungsöffnung |
| 14   | Spur |
| 20   | Kennzeichen |
| 22   | erste Strukturen |
| 25   | strukturierter Bereich |
| 26   | nicht strukturierter Bereich |
| 30   | Lichtquelle |
| 35   | Lichtdetektor |
| 37   | Strahlteiler |
| 40   | Metallschicht |
| 40a  | Vorderseite |
| 40b  | Unterseite |
| 45   | externes polarisierendes Gitter |
| 50   | polarisierendes Gitter |
| 52   | Strukturen des polarisierenden Gitters |
| 60   | zweite Strukturen |
| 80   | dielektrische Schicht |

| $\lambda$ | Wellenlänge |
|-----------|-------------|
| $\Lambda$ | Gitterperiode |
| $\Theta_i$ | Winkel |
| d | Tiefe |
| h | Höhe |
| $n_p^*$ | effektiver Index |
| $n_s$ | Brechungsindex des Substrats |
| $n_c$ | Brechungsindex der dielektrischen Schicht |
| $\varepsilon_m$ | Dielektrizitätskonstante der Metallschicht |

| A | einfallendes Licht |
|---|---------------------|
| B | transmittiertes Licht |
| P | Plasmonenwelle |

**Patentansprüche**

1. Informationsträger (10) mit einer Metallschicht (40) mit wenigstens einer Spur (14), in welcher Kennzeichen (20) angeordnet sind, welche mittels von einer Lichtquelle (30) emittierten Lichts einer zentralen Wellenlänge ($\lambda$), welches unter einem Winkel ($\Theta_i$) auf den Informationsträger (10) einfällt, detektierbar sind und aus welchen die Position des Informationsträgers (10) ableitbar ist, wobei die Kennzeichen (20) durch mit wenigstens mit ersten Strukturen (22) einer Gitterperiode (A) strukturierte Bereiche (25) gebildet sind, welche auf der Unterseite (40b) der Metallschicht (40) und/oder auf der Vorderseite (40a) der Metallschicht (40) angeordnet sind,
**dadurch gekennzeichnet, dass** die Gitterperiode (A) der ersten Strukturen (22) der Gleichung $\Lambda = \lambda/(n_p^* - \sin(\Theta_i))$

oder $\Lambda = \lambda/(n_p^* + \sin(\Theta_i))$ genügt, wobei $\lambda$ die zentrale Wellenlänge des verwendeten Lichts, $\Theta_i$ den Winkel, unter welchem das Licht der Lichtquelle (30) auf den Informationsträger (10) einfällt, und $n_p^*$ den effektiven Index eines Plasmonmodes entlang der Metallschicht (40) bezeichnet.

2. Informationsträger nach Anspruch 1,
**dadurch gekennzeichnet, dass** die Metallschicht (40) auf einem Substrat (12) angeordnet ist.

3. Informationsträger nach Anspruch 1 oder 2,
**dadurch gekennzeichnet, dass** der Winkel ($\Theta_i$) 0° beträgt und somit die Gitterperiode (A) der ersten Strukturen (22) der Gleichung $\Lambda = \lambda/n_p^*$ genügt.

4. Informationsträger nach einem der vorhergehenden Ansprüche,
**dadurch gekennzeichnet, dass** die Metallschicht (40) eine im Wesentlichen homogene Höhe (h) aufweist.

5. Informationsträger nach einem der vorhergehenden Ansprüche,
**dadurch gekennzeichnet, dass** die ersten Strukturen (22) der strukturierten Bereiche (25) sinusförmig ausgebildet sind.

6. Informationsträger nach einem der Ansprüche 2 bis 5,
**dadurch gekennzeichnet, dass** auf der Metallschicht (40) eine dielektrische Schicht (80) angeordnet ist.

7. Informationsträger nach Anspruch 6,
**dadurch gekennzeichnet, dass** die dielektrische Schicht (80) aus Tantalpentoxid, Aluminiumoxid, Titanoxid, Hafniumoxid, Polycarbonat oder dem Material des Substrats (12) besteht.

8. Informationsträger nach einem der vorhergehenden Ansprüche,
**dadurch gekennzeichnet, dass** die zentrale Wellenlänge ($\lambda$) des verwendeten Lichts etwa 890 nm beträgt.

9. Informationsträger nach einem der vorhergehenden Ansprüche,
**dadurch gekennzeichnet, dass** die ersten Strukturen (22) eine Tiefe (d) aufweisen, welche weniger als die Gitterperiode (A), vorzugsweise etwa $1/5^* \Lambda$ bis $1/8^* \Lambda$, vorzugsweise etwa 60 nm bis 130 nm beträgt.

10. Informationsträger nach einem der vorhergehenden Ansprüche,
**dadurch gekennzeichnet, dass** die Metallschicht (40) aus einem Metall besteht, welches in dem Wellenlängenbereich des verwendeten Lichts eine geringe Absorption aufweist.

11. Informationsträger nach einem der vorhergehenden Ansprüche,
**dadurch gekennzeichnet, dass** die Metallschicht (40) aus Gold, Silber, Kupfer oder Aluminium besteht.

12. Informationsträger nach einem der vorhergehenden Ansprüche,
**dadurch gekennzeichnet, dass** die Metallschicht (40) eine Höhe (h) aufweist, welche etwa der Eindringtiefe der Plasmonenwelle entspricht, und welche vorzugsweise etwa 20 bis 60 nm beträgt.

13. Informationsträger nach einem der vorhergehenden Ansprüche,
**dadurch gekennzeichnet, dass** die Rückseite (10b) des Informationsträgers (10) ein polarisierendes Gitter (50) aufweist, dessen Strukturen (52) in ihren Dimensionen den ersten Strukturen (22) entsprechen und dessen Strukturen (52) parallel zu den ersten Strukturen (22) angeordnet sind.

14. Informationsträger nach Anspruch 13,
**dadurch gekennzeichnet, dass** das Licht von der Rückseite (10b) des Informationsträgers (10) her einfällt.

15. Informationsträger nach einem der vorhergehenden Ansprüche,
**dadurch gekennzeichnet, dass** senkrecht zu den ersten Strukturen (22) zweite Strukturen (60) angeordnet sind, welche in ihren Dimensionen den ersten Strukturen (22) entsprechen.

16. Informationsträger nach einem der Ansprüche 2 bis 15,
**dadurch gekennzeichnet, dass** zwischen dem Substrat (12) und der Metallschicht (40) eine Haftschicht angeordnet ist.

**17.** Informationsträger nach Anspruch 16,
**dadurch gekennzeichnet, dass** die Haftschicht aus Titanoxid oder einem anderen Material, welches nur geringe optische Verluste aufweist, besteht.

**18.** Informationsträger nach einem der vorhergehenden Ansprüche,
**dadurch gekennzeichnet, dass** die nicht strukturierten Bereiche (26) das einfallende Licht absorbieren.

**19.** Informationsträger nach einem der vorhergehenden Ansprüche,
**dadurch gekennzeichnet, dass** die ersten Strukturen (22) in sämtlichen Kennzeichen (20) des Informationsträgers (10) parallel zueinander verlaufend angeordnet sind.

**20.** Informationsträger nach einem der vorhergehenden Ansprüche,
**dadurch gekennzeichnet, dass** der Informationsträger (10) scheibenförmig und die Spur (14) umlaufend angeordnet ist.

**21.** Informationsträger nach Anspruch 20,
**dadurch gekennzeichnet, dass** die ersten Strukturen (22) in sämtlichen Kennzeichen (20) des Informationsträgers (10) im Wesentlichen radial oder im Wesentlichen konzentrisch verlaufend angeordnet sind, wobei die ersten Strukturen (22) innerhalb eines Kennzeichens (20) im Wesentlichen parallel zueinander verlaufen.

**22.** Informationsträger nach einem der Ansprüche 2 bis 21,
**dadurch gekennzeichnet, dass** das Substrat (12) im Spritzgussverfahren hergestellt ist.

**23.** Verwendung eines Informationsträger nach einem der vorhergehenden Ansprüche in einem linearen oder rotatorischen Encoder.

**Claims**

**1.** An information carrier (10) with a metallic layer (40) with at least one track (14) in which markings (20) are present which are detectable by means of light of a central wavelength ($\lambda$) emitted by a light source (30) and striking the information carrier (10) at an angle ($\Theta_i$) and from which the position of the information carrier (10) is derivable, wherein the markings (20) are formed by areas (25) which are structured with at least first structures (22) of a grating period (A) which are arranged on the underside (40b) of the metallic layer (40) and/or on the front side (40a) of the metallic layer (40), **characterized in that** the grating period (A) of the first structures (22) conforms to the equation $\Lambda = \lambda/(n_p{}^* - \sin (\Theta_i))$, or $\Lambda = \lambda/(n_p{}^* + \sin (\Theta_i))$, in which $\lambda$ designates the central wavelength of the light used, $\Theta_i$ designates the angle at which the light of the light source (30) strikes the information carrier (10), and $n_p{}^*$ designates the effective index of a plasmon mode along the metallic layer (40).

**2.** An information carrier according to claim 1, **characterized in that** the metallic layer (40) is arranged on a substrate (12).

**3.** An information carrier according to claim 1 or 2, **characterized in that** the angle ($\Theta_i$) amount to 0° and so the grating period (A) of the first structures (22) conforms to the equation $\Lambda = \lambda/n_p{}^*$.

**4.** An information carrier according to any one of the preceding claims, **characterized in that** the metallic layer (40) has a substantially uniform height (h).

**5.** An information carrier according to any one of the preceding claims, **characterized in that** the first structures (22) of the structured areas (25) are designed in a sinusoidal manner.

**6.** An information carrier according to any one of claims 2 to 5, **characterized in that** a dielectric layer (80) is arranged on the metallic layer (40).

**7.** An information carrier according to claim 6, **characterized in that** the dielectric layer (80) consists of tantalum pentoxide, aluminium oxide, titanium oxide, hafnium oxide, polycarbonate or the material of the substrate (12).

**8.** An information carrier according to any one of the preceding claims, **characterized in that** the central wavelength

($\lambda$) of the light used amounts to approximately 890 nm.

9. An information carrier according to any one of the preceding claims, **characterized in that** the first structures (22) have a depth (d) which amounts to less than the grating period (A), preferably from approximately 1/5 * $\Lambda$ to 1/8 * $\Lambda$, and preferably from approximately 60 nm to 130 nm.

10. An information carrier according to any one of the preceding claims, **characterized in that** the metallic layer (40) consists of a metal which has a low absorption in the wavelength range of the light used.

11. An information carrier according to any one of the preceding claims, **characterized in that** the metallic layer (40) consists of gold, silver, copper or aluminium.

12. An information carrier according to any one of the preceding claims, **characterized in that** the metallic layer (40) has a height (h) which corresponds substantially to the depth of penetration of the plasmon shaft and which preferably amounts to approximately 20 to 60 nm.

13. An information carrier according to any one of the preceding claims, **characterized in that** the rear side (10b) of the information carrier (10) has a polarizing grating (50), the structures (52) of which correspond in their dimensions to the first structures (22) and the structures (52) of which are arranged parallel to the first structures.

14. An information carrier according to claim 13, **characterized in that** the light arrives from the rear side (10b) of the information carrier (10).

15. An information carrier according to any one of the preceding claims, **characterized in that** second structures (60), which correspond in their dimensions to the first structures (22), are arranged at right angles to the first structures (22).

16. An information carrier according to any one of claims 2 to 15, **characterized in that** an adhesive layer is arranged between the substrate (12) and the metallic layer (40).

17. An information carrier according to claim 16, **characterized in that** the adhesive layer consists of titanium oxide or another material which has only small optical losses.

18. An information carrier according to any one of the preceding claims, **characterized in that** the non-structured areas (26) absorb the incident light.

19. An information carrier according to any one of the preceding claims, **characterized in that** the first structures (22) in all the markings (20) of the information carrier (10) are arranged extending parallel to one another.

20. An information carrier according to any one of the preceding claims, **characterized in that** the information carrier (10) is in the form of a disc and the track (14) is arranged in a circulating manner.

21. An information carrier according to claim 20, **characterized in that** the first structures (22) in all the markings (20) of the information carrier (10) are arranged extending substantially radially or substantially concentrically, wherein the first structures (22) inside a first marking (20) extend substantially parallel to one another.

22. An information carrier according to any one of claims 2 to 21, **characterized in that** the substrate (12) is produced in the injection-moulding process.

23. Use of an information carrier according to any one of the preceding claims in a linear or rotary encoder.

**Revendications**

1. Support d'informations (10) comportant une couche métallique (40) avec au moins une piste (14) comportant des signes (20) qui se détectent avec de la lumière émise par une source lumineuse (30) ayant une longueur d'onde centrale ($\lambda$), la lumière arrivant suivant un angle ($\Theta_i$) sur le support d'informations (10), et dont on déduit la position du support d'informations (10),
les signes (20) étant formés de zones (25) structurées avec au moins des premières structures (22) d'une période de réseau (A), ces zones étant prévues sur la face inférieure (40b) de la couche métallique (40) et/ou sur la face avant (40a) de la couche métallique (40),

**caractérisé en ce que**

la période de réseau (A) des premières structures (22) répondant aux équations suivantes : $\Lambda = \lambda/(n_p^* - \sin(\Theta_i))$ ou $\Lambda = \lambda/(n_p^* + \sin(\Theta_i))$, dans lesquelles, $\lambda$ représente la longueur d'onde centrale de la lumière utilisée, $\Theta_i$ représente l'angle d'incidence de la lumière de la source lumineuse (30) sur le support d'informations (10) et $n_p^*$ représente l'indice effectif d'un mode de plasmon le long de la couche métallique (40).

2. Support d'informations selon la revendication 1,

   **caractérisé en ce que**

   la couche métallique (40) est prévue sur un substrat (12).

3. Support d'informations selon la revendication 1 ou 2,

   **caractérisé en ce que**

   l'angle ($\Theta_i$) est égal à 0° et ainsi la période de réseau (A) des premières structures (22) répond à l'équation $\Lambda = \lambda/n_p^*$.

4. Support d'informations selon l'une des revendications précédentes,

   **caractérisé en ce que**

   la couche métallique (40) a une hauteur (h) essentiellement homogène.

5. Support d'informations selon l'une des revendications précédentes,

   **caractérisé en ce que**

   les premières structures (22) des zones structurées (25) ont une forme sinusoïdale.

6. Support d'informations selon l'une des revendications 2 à 5,

   **caractérisé en ce qu'**

   une couche diélectrique (80) est appliquée sur la couche métallique (40).

7. Support d'informations selon la revendication 6,

   **caractérisé en ce que**

   la couche diélectrique (80) est en pentoxyde de tantale, en oxyde d'aluminium, en oxyde de titane, en oxyde de hafnium, en polycarbonate ou dans la matière du substrat (12).

8. Support d'informations selon l'une des revendications précédentes,

   **caractérisé en ce que**

   la longueur d'onde centrale ($\lambda$) de la lumière utilisée, est de l'ordre de 890 nm.

9. Support d'informations selon l'une des revendications précédentes,

   **caractérisé en ce que**

   les premières structures (22) ont une profondeur (d) inférieure à la période de réseau (A), de préférence de l'ordre de $1/5^* \Lambda$ jusqu'à $1/8^* \Lambda$, de préférence de l'ordre de 60 nm jusqu'à 130 nm.

10. Support d'informations selon l'une des revendications précédentes,

    **caractérisé en ce que**

    la couche métallique (40) est en un métal qui présente une faible absorption dans la plage des longueurs d'onde de la lumière utilisée.

11. Support d'informations selon l'une des revendications précédentes,

    **caractérisé en ce que**

    la couche métallique (40) est en or, en argent, en cuivre ou en aluminium.

12. Support d'informations selon l'une des revendications précédentes,

    **caractérisé en ce que**

    la couche métallique (40) a une hauteur (h) correspondant sensiblement à la profondeur de pénétration de l'onde de plasmon et qui correspond sensiblement à 20 jusqu'à 60 nm.

13. Support d'informations selon l'une des revendications précédentes,

    **caractérisé en ce que**

le côté arrière (10b) du support d'informations (10) comporte un réseau polarisant (50) dont les structures (52) correspondent par leurs dimensions aux premières structures (22) et dont les structures (52) sont parallèles aux premières structures (22).

**14.** Support d'informations selon la revendication 13,
**caractérisé en ce que**
la lumière est incidente à partir du côté arrière (10b) du support d'informations (10).

**15.** Support d'informations selon l'une des revendications précédentes,
**caractérisé en ce que**
des secondes structures (60) sont perpendiculaires aux premières structures (22) et ces secondes structures correspondent par leurs dimensions à celles des premières structures (22).

**16.** Support d'informations selon l'une des revendications 2 à 15,
**caractérisé par**
une couche adhésive entre le substrat (12) et la couche métallique (40).

**17.** Support d'informations selon la revendication 16,
**caractérisé en ce que**
la couche adhésive est en oxyde de titane ou en un autre matériau qui ne présente que de faibles pertes optiques.

**18.** Support d'informations selon l'une des revendications précédentes,
**caractérisé en ce que**
les zones (26) non structurées absorbent la lumière incidente.

**19.** Support d'informations selon l'une des revendications précédentes,
**caractérisé en ce que**
les premières structures (22) sont prévues dans tous les signes (20) du support d'informations (10), en étant dirigées parallèlement les unes aux autres.

**20.** Support d'informations selon l'une des revendications précédentes,
**caractérisé en ce que**
le support d'informations (10) est en forme de disque et la piste (14) est enroulée.

**21.** Support d'informations selon la revendication 20,
**caractérisé en ce que**
dans tous les signes (20) du support d'informations (10), les premières structures sont pratiquement radiales ou essentiellement concentriques si bien que dans un signe (20), les premières structures (22) sont pratiquement parallèles.

**22.** Support d'informations selon l'une des revendications 2 à 21,
**caractérisé en ce que**
le substrat (12) est fabriqué par injection.

**23.** Utilisation d'un support d'informations selon l'une des revendications précédentes, dans un codeur linéaire ou de rotation.

FIG 1a

## FIG 1b

40a   22

40b  10        40

## FIG 1c

40   10

## FIG 1d

40a   40

40b  10   12   12a

## FIG 1e

40b   40a   40

12a  10   12

## FIG 1f

80

10   40   12

FIG 2

FIG 3

FIG 5

FIG 4

52  50  10b  80

52  10b  10

12  13

12

26

10  25  22  10a  20  40  80

20  13  10

26  25

12  14  10a  14

EP 1 801 546 B1

FIG 6a

FIG 6b

EP 1 801 546 B1

FIG 7a

FIG 7b

# FIG 8

FIG 9a

FIG.9b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004011146 A1
- EP 0685708 A2

### In der Beschreibung aufgeführte Nicht-Patentliteratur

- **F. PIGEON et al.** Identity of long-range surface plasmons along asymmetric structures and their potential for refractometric sensors. *Journal of Applied Physics,* vol. 90 (2), 852-859
- **N. BONOD et al.** Resonant optical transmission through thin metallic films with and without holes. *Optics Express,* vol. 11 (5), 482-490